Europäisches Patentamt

European Patent Office

Office européen des brevets

(11) Publication number: **0 423 371 A1**

# EUROPEAN PATENT APPLICATION
## published in accordance with Art. 158(3) EPC

(21) Application number: 90907381.9

(22) Date of filing: 01.05.90

(86) International application number:
PCT/JP90/00574

(87) International publication number:
WO 90/13230 (15.11.90 90/26)

(51) Int. Cl.5: **A23L 3/36, F25C 1/00**

(30) Priority: 28.04.89 JP 109991/89

(43) Date of publication of application:
24.04.91 Bulletin 91/17

(84) Designated Contracting States:
BE DE FR GB NL

(71) Applicant: Osaka Sanso Kogyo KK
Sumitomo Seimei Shin-Osaka Kita Bldg 1-14
Miyahara
4-Chome, Yodogawa-ku Osaka 532(JP)

Applicant: SNOW BRAND MILK PRODUCTS &
CO., LTD.
1-1, Naebo-cho 6-chome Higashi-ku
Sapporo-shi Hokkaido 065(JP)

(72) Inventor: ISHIHARA, Mamoru
1-2-105, Shiginonishi 5-chome Joto-ku
Osaka-shi Osaka 536(JP)

Inventor: TAKENAKA, Iku
27-1-306, Asahigaoka 1-chome Otsu-shi
Shiga 520(JP)
Inventor: TSUKAMOTO, Hideki
1-449, Aza-Nishinagao Higashi Uneno
Kawanishi-shi Hyogo 666-01(JP)
Inventor: NAKAGAWA, Satoshi
14-11, Tsuganodai 4-chome Chiba-shi
Chiba 260(JP)
Inventor: TSUKUNE, Norio
824-38, Kakinuma Kumagaya-shi
Saitama 360(JP)
Inventor: ARITA, Kanji
1523, Sakata Oizumi-cho
Ora-gun Gunma 370-05(JP)

(74) Representative: Bousfield, Roger James
The BOC Group plc Chertsey Road
Windlesham Surrey GU20 6HJ(GB)

(54) METHOD AND APPARATUS FOR FREEZE-MOLDING SOFT AND FLUID FOODSTUFF.

(57) A freeze-molding of a soft and fluid foodstuff comprising extruding the foodstuff in a desired sectional shape and in a continuous state into a refrigerant, moving the foodstuff inside the refrigerant while keeping its oontinuous state, causing freezing to proceed from the outer surface into the interior of the foodstuff during the movement, taking out the foodstuff from the refrigerant conveying the foodstuff while keeping its continuous state and cutting it so as to shape the foodstuff into a foodstuff product having a desired shape.

FIG. 1

## METHOD OF AND APPARATUS FOR FREEZE-FORMING SOFT FLUIDIC FOOD

### INDUSTRIALLY APPLICABLE FIELD

The present invention relates to a method of and apparatus for freeze-forming a soft fluidic food. More specifically, the present invention relates to a method of and apparatus for freeze-forming a soft fluidic food, which are capable of freeze-forming a soft fluidic food readily and hygienically and which are suitable for the production of a variety of articles.

### BACKGROUND ART

In freeze-forming a soft fluidic food, for example, cream croquette, it is conventional practice to freeze a soft fluidic food material in a refrigerator and then form the frozen material into a desired shape by, for example, cutting. This method involves complicated operations and is inefficient, and since the method requires a large number of manual operations, it is not hygienic.

In view of these problems, a freeze-forming machine such as that disclosed in Japanese Patent Publication No. 61-30546 was proposed. However, the proposed machine involves the problems that the apparatus is complicated and it is unsuitable for the production of a variety of articles

### DISCLOSURE OF INVENTION

It is an object of the present invention to solve the above-described problems. The present invention provides a method of freeze-forming a soft fluidic food, comprising the steps of: feeding a soft fluidic food material into a cryogen in a desired cross-sectional configuration and in a continuous form; moving the soft fluidic food material in the cryogen while maintaining the continuous form; and feeding out the soft fluidic food material, which is in continuous form, from the cryogen, and while doing so, cutting the soft fluidic food material, thereby forming a food with a desired shape.

In addition, the present invention provides an apparatus for freeze-forming a soft fluidic food, comprising: an extruding unit having an extruding nozzle having a desired cross-sectional configuration at a discharge end portion thereof, and an extruder which extrudes a soft fluidic food material in a continuous form through the extruding nozzle; a freezing unit having a reservoir which contains a cryogen and has the discharge end portion of the extruding nozzle inserted therein, and an endless continuously moving means which is installed in the reservoir to receive at one end thereof the soft fluidic food material from the discharge end portion and move it toward the other end while maintaining the continuous form; and a processing unit having a means for receiving the soft fluidic food material from the endless continuously moving means and feeding it out, and a cutting means which is provided along the feed direction of the outfeed means.

### BRIEF DESCRIPTION OF DRAWINGS

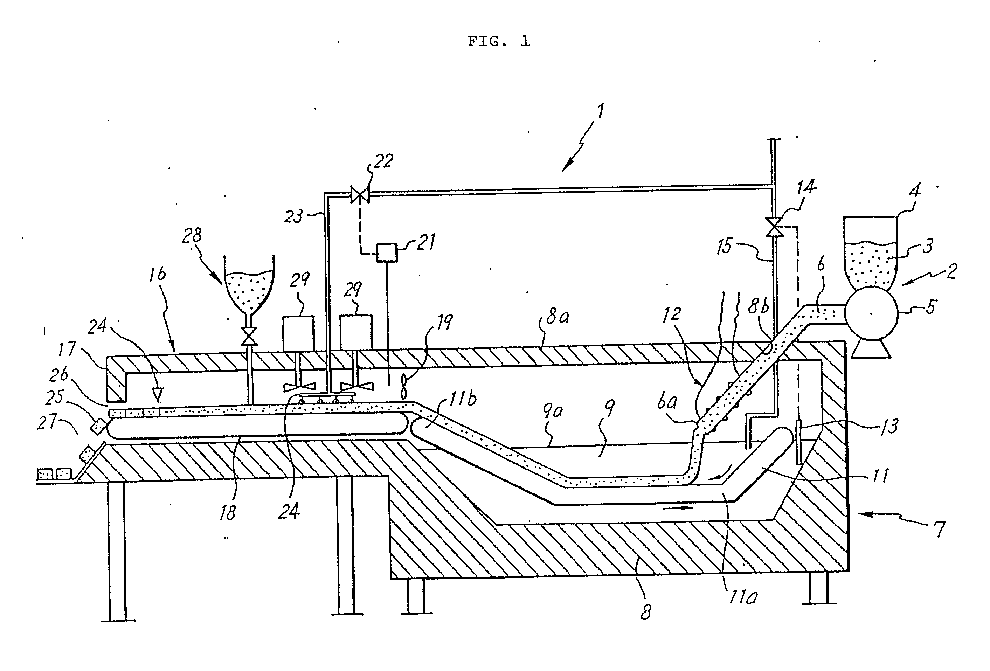

Fig. 1 schematically shows the arrangement of the present invention.

### BEST MODE FOR CARRYING OUT THE INVENTION

One embodiment of the present invention will be described below on the basis of the drawing.

Fig. 1 schematically shows the arrangement of a freeze-forming apparatus 1 according to one embodiment of the present invention.

Reference numeral 2 denotes an extruding unit that extrudes a soft fluidic food material 3 in a continuous form, the extruding unit 3 comprising a hopper 4 for storing the material 3 and an extruder that pushes the material 3 from the hopper 4 into an extruding nozzle 6 and extrudes it from the distal end 6a of the nozzle 6, the extruder being comprised of a pump 5 in this embodiment.

Reference numeral 7 denotes a freezing unit which comprises a reservoir 8 that is made of a heat insulating material and that is stored with liquid nitrogen 9 as a cryogen, and an endless belt conveyor 11 that is installed in the reservoir 8, the belt conveyor 11 being immersed in the liquid nitrogen 9 except for the end portions thereof.

The distal end 6a of the extruding nozzle 6 is inserted into the reservoir 8 through a bore 8b that is provided in a cover 8a of the reservoir 8, and it is disposed above a material receiving portion 11a of the endless belt conveyor 11. The pump 5 operates continuously to cause the material 3 to be discharged from one end 6a of the nozzle 6 into the liquid nitrogen 9 at a constant discharge rate and in a continuous form. The distal end 6a of the nozzle 6 is preferably kept out of contact with the liquid nitrogen 9 so that the material 3 will not harden inside the nozzle 6, but it may be immersed in the liquid nitrogen 9, depending upon the temperature of the material and the extrusion rate. A coil of a heater 12 is wound around the outer periphery of a portion of the extruding nozzle 6 which is near the distal end 6a to heat this portion, thereby preventing the material 3 from hardening in the extruding nozzle 6 by the low-temperature nitrogen gas that fills the space in the reservoir 8 above the liquid nitrogen 9. It should be noted that the distal end 6a of the extruding nozzle 6 may have a desired cross-sectional configuration in conformity with the cross-sectional configuration of a food that is to be freeze-formed, for example, a circular, square, starlike or heart-shaped configuration. The material 3 that is extruded from the distal end 6a of the extruding nozzle 6 into the liquid nitrogen 9 is lowered in the liquid nitrogen 9 toward the material receiving portion 11a of the belt conveyor 11, and during this period of time, i.e., several seconds, the surface portion of the material 3 hardens. Because the surface of the material 3 hardens and the specific gravity of soft fluidic foods is generally close to the specific gravity of liquid nitrogen, the lowering speed of the material 3 when lowering in the liquid nitrogen 9 is slow, so that there is no possibility that the shape of the material 3 that is formed by the distal end 6a of the nozzle will be deformed while the material 3 is being lowered in the liquid nitrogen 9. In addition, the impact that acts on the material 3 when coming into contact with the belt conveyor 11 is extremely small, so that there is no possibility that the shape of the material 3 will be deformed or the shape of the belt surface will be imprinted on the surface of the material 3.

The belt conveyor 11 moves in the direction of the arrows shown in the figure to transport the material 3 that is received at the material receiving portion 11a to a material delivery portion 11b through the liquid nitrogen 9. During the transport operation, the material 3 is progressively frozen from the outer reference thereof to the inside. Since the speed of the belt conveyor 11 is set in connection with the discharge rate of the pump 5, the material 3 is transported by the belt conveyor while maintaining the continuous form in which it is discharged from the distal end 6a of the nozzle. Reference numeral 13 denotes a level gage that detects the position of the level 9a of the liquid nitrogen 9. When the level 9a falls below a certain position, a valve 14 is opened to supply liquid nitrogen to the reservoir 8 from a liquid nitrogen storage tank (not shown) through a pipe 15.

A processing unit 16 is provided adjacent to the freezing unit 7. A housing 17 of the processing unit 16 is, in this embodiment, formed from a heat insulating material as an integral part of the reservoir 8 of the freezing unit 7. A second belt conveyor 18 is installed in the housing 17 adjacently to the material delivery portion 11b of the belt conveyor 11 in the freezing unit 7 to receive the material 3 from the belt conveyor 11 at one end thereof and transport it to the other end. The speed of travel of the second belt conveyor 18 is adjusted so as to be in conformity with the traveling speed of the belt conveyor 11 in the freezing unit 7, that is, in conformity to the discharge rate of the pump 5, so that the second belt conveyor 18 receives the material 3 from the belt conveyor 11 with the continuous form being maintained and transports it in this state.

A fan 19 is installed at the communicating joint of the reservoir 8 and the housing 17 to send into the housing 17 the low-temperature nitrogen gas that is present in the upper part of the reservoir 8 as a result of the gasification of the liquid nitrogen 9, which is induced by using the temperature thereof to freeze and harden the material 3, thereby using the low-temperature nitrogen gas to continuously freeze the material 3 in the housing 17, and thus effectively utilizing the cold of the nitrogen gas. Accordingly, while the material is being transported by the belt conveyor 18, the freezing further progresses toward the center of the material 3. Reference numeral 21 denotes a temperature sensor that detects the temperature inside the housing 17. When the cold provided by the low-temperature nitrogen gas that is introduced into the housing 17 is insufficient, a valve 22 is opened to inject liquid nitrogen from a nozzle 24 through a pipe 23, thereby enhancing the cold efficiency, and thus promoting the hardening of the material 3 to the center thereof. In other words, the fan 19, the temperature sensor 21, the valve 22, the pipe 23, the nozzle 24, the belt conveyor 18, etc. constitute a post-freezing unit. In addition, an agitating fan 29 may be provided to make uniform the temperature inside the housing and also to enhance the freezing efficiency.

A cutter 31 is provided in the housing 17 at a predetermined position along the second belt conveyor 18. The cutter 31 is actuated at a predetermined interval of time in association with the movement of the belt conveyor 18 to cut the material 3 on the belt conveyor 18, thereby forming articles of food having a

4

predetermined length and shape. Although in this embodiment only one cutter is provided, a plurality of cutters may be provided, if necessary, at intervals along the direction of movement of the belt conveyor 18, or in opposing relation to each other across the belt conveyor 18. Articles of food 25 which are cut are continuously transported by the belt conveyor 18 in this state and fed to a delivery chute 27 through an opening 26 that is provided in the housing 17, thereby being delivered to the subsequent buttering, packaging and packing processes. It should be noted that a topping unit 28 for placing another additive on the surface of articles of food 25 may also be provided at the upstream side of the cutter 31. As one of the soft fluidic foods, cream croquette was experimentally produced by use of the method and apparatus according to the present invention. The results of the experimental production are shown in Tables 1 and 2. Table 1 shows the physical properties of the material, and Table 2 the results of the experiment.

## Table 1

| Viscosity | $4.8 \times 10^2$ poise (5 °C) |
|-----------|-------------------------------|
| Density | 1.03 g/m$\ell$ (5 °C) |
| Hardness | 5.0 g/cm$^2$ (5 °C) |
| Water | 75% |

## Table 2

| Initial temperature of croquette | about +30 °C |
|----------------------------------|--------------|
| Processing rate | about 35 kg/hr |
| Extruding nozzle configuration | 25 mm in inner diameter |
| Dipping time in liquid nitrogen | about 20 seconds |
| Liquid nitrogen temperature | about -196 °C |
| Croquette temperature after dipping in liquid nitrogen | about -6 °C at surface |
| | about 25 °C at center |
| Post-freezing time | about 3 minutes |
| Temperature in post-freezing unit | from -30 °C to -60 °C |
| Final temperature of croquette | about -10 °C at surface |
| | about 0 °C at center |

After dipping in the liquid nitrogen, the cream croquette was frozen to a depth of about 1mm from the surface, so that it was not deformed and it was possible to maintain the shape that was formed when the material was discharged from the nozzle.

After the passage through the post-freezing unit, the cream croquette was frozen to a depth of about 10mm from the surface, that is, the freezing was substantially completed, so that it was able to be cut easily and without deforming the shape thereof.

As will be clear from the foregoing description, the present invention eliminates the need for containers for forming which have heretofore been employed in the conventional method or apparatus, so that it becomes unnecessary to conduct complicated operations, for example, the filling of containers and the removal therefrom. In consequence, the production efficiency is improved and it becomes possible to perform freeze-forming of a soft fluidic food which is extremely superior in terms of hygiene control. The arrangement of the apparatus needs no complicated mechanism, and is easy to handle and can be produced at low cost and can also be completely automated. In addition, the apparatus can be readily adapted for the production of a variety of articles by properly changing the configuration of the extruding nozzle, the discharge rate, the speed of the belt conveyors, the cutting timing, etc.

By providing the post-freezing unit, the cold of the cryogen can be utilized efficiently.

Although one embodiment of the present invention has been described above, it will be understood that the invention of this application is not necessarily limited to the described embodiment. It will be apparent to those skilled in the art from the foregoing description that various changes and modifications may be made, and it should be noted that such changes and modifications are included in the invention of this application.

## Claims

1. A method of freeze-forming a soft fluidic food, comprising the steps of: extruding a soft fluidic food material into a cryogen in a desired cross-sectional configuration and in a continuous form; moving said soft fluidic food material in said cryogen while maintaining the continuous form; and receiving said soft fluidic food material from said cryogen, and cutting said soft fluidic food material while feeding it out with the continuous form being maintained, thereby forming a food with a desired shape.

2. An apparatus for freeze-forming a soft fluidic food, comprising: an extruding unit having an extruding nozzle having a desired cross-sectional configuration at a discharge end portion thereof, and an extruder which extrudes a soft fluidic food material in a continuous form through said extruding nozzle; a freezing unit having a reservoir which contains a cryogen and has the discharge end portion of said extruding nozzle inserted therein, and an endless continuously moving means which is installed in said reservoir to receive at one end thereof said soft fluidic food material from said discharge end portion and move it toward the other end while maintaining the continuous form; and a processing unit having a means for receiving said soft fluidic food material from said endless continuously moving means and feeding it out, and a cutting means for cutting said material which is in the continuous form, said cutting means being provided along the feed direction of said outfeed means.

3. A freeze-forming apparatus according to Claim 2, wherein a post-freezing unit is provided between said freezing unit and said processing unit, said post-freezing unit comprising a housing which is communicated at both ends thereof with the upper part of said reservoir of said freezing unit and said processing unit, a second continuously moving means which is installed in said housing to receive said material from said continuously moving means of said freezing unit and feed it to said processing unit, and a means for introducing a gas into said housing from the upper part of said reservoir.

FIG. 1

EP 0 423 371 A1

# INTERNATIONAL SEARCH REPORT

International Application No PCT/JP90/00574

| I. CLASSIFICATION OF SUBJECT MATTER (if several classification symbols apply, indicate all) 6 |
|---|

According to International Patent Classification (IPC) or to both National Classification and IPC

Int. Cl⁵  A23L3/36, F25C1/00

## II. FIELDS SEARCHED

Minimum Documentation Searched 7

| Classification System | Classification Symbols |
|---|---|
| IPC | A23L3/36, F25C1/00 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 63-54571 (Tokiwa Kogyo K.K.), 8 March 1988 (08. 03. 88), Lines 5 to 16, lower left column, page 1 (Family: none) | 1, 2 |
| A | JP, A, 61-242568 (Toyo Seisakusho K.K.), 28 October 1986 (28. 10. 86), Lines 5 to 12, lower left column, page 1 (Family: none) | 1, 2 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| June 21, 1990 (21. 06. 90) | July 9, 1990 (09. 07. 90) |
| International Searching Authority | Signature of Authorized Officer |
| Japanese Patent Office | - |